# EUROPÄISCHE PATENTSCHRIFT

(11) **EP 0 774 509 B1**
(45) Veröffentlichungstag und Bekanntmachung des Hinweises auf die Patenterteilung: **16.07.2003**
(21) Anmeldenummer: 96115180.0
(22) Anmeldetag: 20.09.1996
(51) Int. Cl.: C12C 7/17

(54) **Läuterbottich**
Lauter tun
Cure filtre

(30) Priorität: 30.10.1995 DE 29517345 U
(43) Veröffentlichungstag der Anmeldung: 21.05.1997
(73) Patentinhaber: Anton Steinecker Maschinenfabrik GmbH, 85356 Freising-Attaching (DE)
(72) Erfinder: Stippler, Kurt, Dr.-Ing., 85417 Marzling (DE); Wasmuht, Klaus-Karl, 91792 Ellingen (DE)
(74) Vertreter: Grünecker, Kinkeldey, Stockmair & Schwanhäusser Anwaltssozietät

(56) Entgegenhaltungen:
- DE-A- 1 442 184
- DE-A- 3 403 072
- DE-A- 4 324 293
- DE-B- 1 059 861
- US-A- 4 542 682
- LÄUTERTECHNIK; FIRMENPROSPEKT FA. STEINECKER, Nr. 2, 1995, Seiten 1-12, XP002174271 Freising-Attaching

## Beschreibung

Die Erfindung betrifft einen Läuterbottich für die Bierherstellung, mit einer Vielzahl von Läuterrohren, die mit ihren Mündungen im Bodenbereich des Läuterbottichs über die Bodenfläche gleichmäßig verteilt angeordnet sind und in ein tiefer als der Boden des Läuterbottichs liegendes Sammelgefäß münden, und von dort einem Puffergefäß zugeführt werden, dessen Füllstand geregelt wird und das über eine Ausgleichsleitung mit dem Luftraum des Läuterbottichs verbunden ist.

Es ist bekannt, insbesondere bei größeren Läuterbottichen, beim Abläutern die Würze aus verschiedenen Bereichen, beispielsweise aus inneren Quellgebieten und aus äußeren Quellgebieten, in getrennte Abteilungen bzw. Kammern eines Sammelgefäßes abzuleiten. Damit kann im Sinne einer gleichmäßigen Abläuterung aus allen Quellgebieten dem Umstand Rechnung getragen werden, daß aufgrund des größeren Umfangs des Läuterbottichs in den äußeren Quellgebieten mengenmäßig mehr Flüssigkeit aus diesen Gebieten abfließt als aus den inneren Quellgebieten.

Im Stand der Technik (vgl. z.B. Steinecker-Prospekt "Läutertechnik 2/95") ist es bekannt, die sich in den einzelnen Kammern des Sammelgefäßes sammelnde Würze über Leitungen unterschiedlichen Durchmessers an eine Würzesammelleitung weiterzugeben, die zu einem Puffergefäß führt. Im Puffergefäß, das über eine Ausgleichsleitung mit dem Luftraum des Läuterbottichs in Verbindung steht, wird der Füllstand auf ein bestimmtes Niveau geregelt, indem mittels einer Pumpe entsprechend mehr oder weniger Würze aus dem Puffergefäß entnommen wird. Da die einzelnen Leitungen aus dem Sammelgefäß mit unterschiedlichem Querschnitt in die zum Puffergefäß führende Sammelleitung münden, kann es geschehen, daß aufgrund des mengenmäßig größeren Flüssigkeitsdurchsatzes aus den Rohren mit größerem Durchmesser in den Rohren und damit Leitungen geringeren Durchmessers ein Sogeffekt, d.h. also ein Unterdruck erzeugt wird, was zur Blasenbildung in der Würze führen kann, die unerwünscht ist.

Aufgabe der Erfindung ist es daher, einen Läuterbottich der eingangs genannten Art anzugeben, bei dem durch einfache bauliche Maßnahmen zuverlässig eine Blasenbildung in der ablaufenden Würze beim Abläutern vermieden werden kann.

Gelöst wird diese Aufgabe dadurch, daß alle Läuterrohre in einem gemeinsamen Raum des Sammelgefäßes münden und daß dieser Raum über eine einzelne Verbindungsleitung mit dem Puffergefäß verbunden ist.

Da alle Läuterrohre in ein gemeinsames Sammelgefäß münden, und nur ein Verbindungsrohr aus dem Sammelgefäß in das Puffergefäß führt, existiert in dem Sammelgefäß ein einheitlicher Druck. Deswegen kann kein Sogeffekt entstehen und es kann daher nicht zu der unerwünschten Blasenbildung kommen.

Da das Sammelgefäß nicht unterteilt ist und nur eine Verbindungsleitung vom Sammelgefäß zum Puffergefäß und somit auch nur eine Regelklappe vorhanden ist, ist der Aufbau stark vereinfacht und kostengünstiger als bei bekannten Lösungen.

In vorteilhafter Ausgestaltung der Erfindung werden die Läuterrohre, entsprechend ihrem radialen Abstand von der Mitte des Läuterbottichs, in Gruppen zusammengefaßt. Läuterrohre, die verschiedenen Gruppen zugeordnet sind, haben verschieden große Durchmesser. Auf diese Weise können die unterschiedlichen Mengen an Flüssigkeit, die aus Quellgebieten mit unterschiedlichem radialen Abstand von der Mitte des Läuterbottichs abgeführt werden müssen, ausgeglichen werden, so daß aus allen Quellgebieten gleich viel Flüssigkeit in das Sammelgefäß fließt.

In weiterer Ausgestaltung der Erfindung ist in dem Puffergefäß eine Stabsonde angeordnet, die den Füllstand mißt. Abhängig vom Meßergebnis kann dann eine Pumpe gesteuert werden, die entsprechende Würzemengen aus dem Puffergefäß so entnimmt, daß der Füllstand im wesentlichen konstant gehalten wird.

Anstelle einer Stabsonde kann auch ein Druckaufnehmer den Füllstand erfassen.

Vorteilhaft ist das Puffergefäß so ausgebildet bzw. angeordnet, daß sein oberer Abschluß oberhalb des Senkbodens zu liegen kommt.

Dies ermöglicht es, beim Abläutern der Vorderwürze mit sehr geringer Druckdifferenz zu fahren, wobei die Druckdifferenz je nach Viskosität der Würze einstellbar ist.

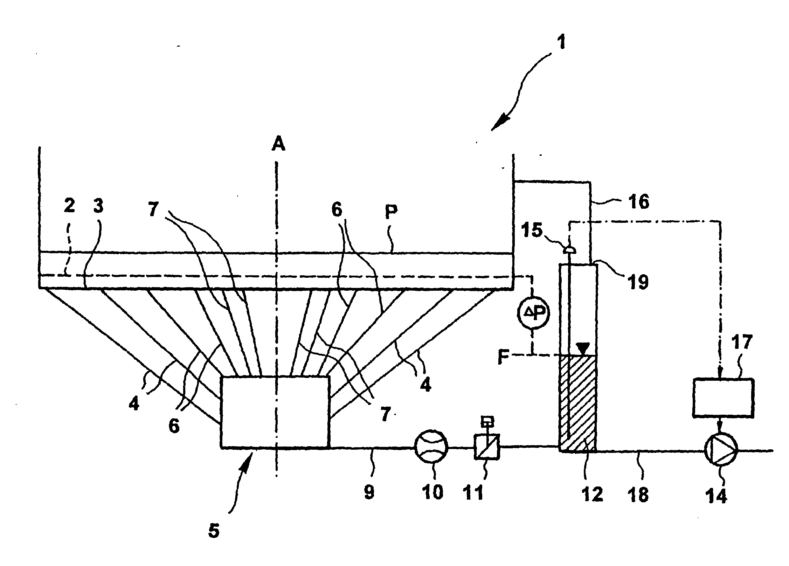

Die Erfindung wird im folgenden anhand des in der Zeichnung dargestellten Ausführungsbeispiels weiter erläutert.

In der Figur, die eine schematische Darstellung der Erfindung zeigt, ist der Läuterbottich insgesamt mit 1 bezeichnet. Dargestellt ist nur der untere Teil des Läuterbottichs. Das Bezugszeichen 2 bezeichnet den Senkboden. Im übrigen wird zum grundsätzlichen Aufbau eines Läuterbottichs z.B. auf den Steinecker-Prospekt 2/95 "Läutertechnik" verwiesen.

Die im Läuterbottich 1 mit dem Pegel P stehende Würze wird unterhalb des Senkbodens 2 durch die über die Bodenfläche 3 gleichmäßig verteilt mündenden Läuterrohre 4, 6, 7 entnommen. Alle Läuterrohre sind an einen gemeinsamen Raum des Sammelgefäßes 5 angeschlossen. Das Sammelgefäß ist also nicht zusätzlich unterteilt. Das Sammelgefäß ist über eine einzelne Leitung 9 mit einem Durchflußmesser 10 und über eine Regelklappe 11 an das Puffergefäß 12 angeschlossen. Da das Sammelgefäß nicht unterteilt ist, ist der Druck darin einheitlich. Es bildet sich also kein partieller Unterdruck, der zum Entgasen der Würze führen würde. Um den unterschiedlichen Flüssigkeitsmengen, die aus verschiedenen Quellgebieten des Läuterbottichs in das Sammelgefäß fließen, Rechnung zu tragen, sind die Läuterrohre mit verschiedenem radialen Abstand von der Mitte des Läuterbottichs mit verschieden großen Durchmessern ausgestattet, so daß aus allen Quellgebieten gleich viel Flüssigkeit in das Sammelgefäß fließt. Die Anpassung der Abflußmenge wird also durch geeignete Wahl der Abfließquerschnitte der Läuterrohre 4, 6, 7 vorgenommen. Beispielsweise können in dem gezeigten Ausführungsbeispiel die Läuterrohre 4 mit größtem radialen Abstand von der Achse A des Läuterbottichs 1 einen größeren Durchmesser haben als die Läuterrohre 6, die einen kleineren radialen Abstand haben, die wiederum einen größeren Durchmesser haben als die Läuterrohre 7, die den geringsten Abstand von der Achse A des Läuterbottichs 1 haben.

Im Puffergefäß wird der Füllstand über eine Sonde 15 gemessen. Anstelle dieser Sonde kann auch ein nicht dargestellte Drucksensor angeordnet sein. Das Signal der Sonde 15 wird auf eine Regeleinrichtung 17 gegeben. Dieses Regelgerät 17 regelt die Pumpe 14, die dann aus dem Puffergefäß 12 die Würze so entnimmt, daß ein bestimmter Füllstand innerhalb gewisser Grenzen aufrechterhalten bleibt.

Im oberen Teil ist das Puffergefäß 12 über eine Ausgleichsleitung 16 mit dem Luftinnenraum des Läuterbottichs 1 verbunden, so daß das System insgesamt als offenes System ausgebildet ist. Der Füllstand F wird dabei so eingestellt, daß sich eine Druckdifferenz ΔP einstellt, wobei der größere Druck auf der Läuterbottichseite herrscht. Durch Absenken des Pegels der Flüssigkeit im Puffergefäß 12 läßt sich die Druckdifferenz erhöhen, so daß über den Pegelstand im Puffergefäß auch die Läutergeschwindigkeit über die Druckdifferenz beeinflußbar ist.

Beim Abläutern der Vorderwürze sollte mit möglichst geringer Druckdifferenz ΔP gearbeitet werden. Um das zu ermöglichen, liegt der obere Abschluß 19 des Puffergefäßes 12, das z.B. die Form eines langgestreckten Rohres haben kann, oberhalb des Senkbodenniveaus 2.

## Patentansprüche

1. Läuterbottich (1) mit einer Vielzahl von Läuterrohren (4, 6, 7), die mit ihren Mündungen im Bodenbereich des Läuterbottichs über die Bodenfläche (3) gleichmäßig verteilt angeordnet sind, in ein tiefer als der Boden (3) des Läuterbottichs liegendes Sammelgefäß (5) münden und von dort einem Puffergefäß (12) zugeführt werden, dessen Füllstand (F) geregelt wird und das über eine Ausgleichsleitung (16) mit dem Luftraum des Läuterbottichs (1) verbunden ist, **dadurch gekennzeichnet, daß** alle Läuterrohre (4, 6, 7) in einen gemeinsamen Raum des Sammelgefäßes (5) münden, und dieser Raum über eine einzelne Verbindungsleitung (9) mit dem Puffergefäß (12) verbunden ist.

2. Läuterbottich nach Anspruch 1, **dadurch gekennzeichnet, daß** die Läuterrohre (4, 6, 7), entsprechend ihrem radialen Abstand von der Mitte des Läuterbottichs (1), in Gruppen zusammengefaßt werden, und Läuterrohre, die verschiedenen Gruppen zugeordnet sind, verschiedene Durchmesser haben.

3. Läuterbottich nach einem der Ansprüche 1 oder 2, **dadurch gekennzeichnet, daß** im Puffergefäß (12) eine Stabsonde (15) angeordnet ist, die den Füllstand (F) im Puffergefäß (12) mißt.

4. Läuterbottich nach einem der Ansprüche 1 oder 2, **dadurch gekennzeichnet, daß** im Puffergefäß (12) ein Druckaufnehmer angeordnet ist, der den Füllstand im Puffergefäß mißt.

5. Läuterbottich nach einem der vorangegangenen Ansprüche, **dadurch gekennzeichnet, daß** das Puffergefäß (12) so ausgebildet ist, daß sein oberer Abschluß (9) oberhalb des Senkbodens (2) liegt.

## Claims

1. A lauter tun (1) comprising a plurality of lauter pipes (4, 6, 7) which are arranged with their openings in the bottom portion of said lauter tun in evenly distributed fashion over a bottom surface (3), which end in a collecting vessel (5) that is located at a lower level than said bottom (3) of said lauter tun, and are led therefrom to a buffer vessel (12) the level (F) of which is controlled, and which is connected via a compensating duct (16) to the air chamber of said lauter tun (1), **characterized in that** all of said lauter pipes (4, 6, 7) end in a joint chamber of said collecting vessel (5), and said chamber is connected via a single connecting duct (9) to said buffer vessel (12).

2. A lauter tun according to claim 1, **characterized in that** said lauter pipes (4, 6, 7) are combined in groups in accordance with their radial distance from the center of said lauter tun (1), and said lauter pipes which are assigned to different groups have different diameters.

3. A lauter tun according to any of claim 1 or 2, **characterized in that** a rod type probe (15) which measures said level (F) in said buffer vessel (12) is arranged in said buffer vessel (12).

4. A lauter tun according to any of claim 1 or 2, **characterized in that** a pressure sensor which measures the level in said buffer vessel is arranged in said buffer vessel (12).

5. A lauter tun according to any of the preceding claims, **characterized in that** said buffer vessel (12) is formed such that its upper end (9) is positioned above said false bottom (3).

## Revendications

1. Cuve-filtre (1) présentant une pluralité de tubes de filtrage (4, 6, 7), qui par leurs embouchures sont disposés dans la zone de fond de la cuve-filtre de manière régulièrement répartie sur la face formant fond (3) et débouchent dans une cuve collectrice (5) située plus bas que le fond (3) de la cuve-filtre, et de là sont amenés à une cuve-tampon (12), dont le niveau de remplissage (F) est régulé et qui est reliée via une conduite de compensation (16) à l'espace libre de la cuve-filtre (1), **caractérisée en ce que** tous les tous les tubes de filtrage (4, 6, 7) débouchent dans un espace commun de la cuve collectrice (5) et que cet espace est relié à la cuve-tampon (12) via une seule conduite de liaison (9).

2. Cuve-filtre selon la revendication 1, **caractérisée en ce que** les tubes de filtrage (4, 6, 7) sont réunis en groupes selon leur éloignement radial par rapport au centre de la cuve-filtre (1), et les tubes de filtrage qui sont classés dans les différents groupes, ont des diamètres différents.

3. Cuve-filtre selon l'une des revendications 1 ou 2, **caractérisé en ce que** dans la cuve-tampon (12) est disposée une tige-sonde (15), qui mesure le niveau de remplissage (F) dans la cuve-tampon (12).

4. Cuve-filtre selon l'une des revendications 1 ou 2, **caractérisé en ce que** dans la cuve-tampon (12) est disposé un capteur de pression, qui mesure le niveau de remplissage dans la cuve-tampon.

5. Cuve-filtre selon l'une des revendications précédentes, **caractérisé en ce que** la cuve-tampon (12) est conçue de manière telle que son dessus (9) se situe au-dessus du fond de décantation (2).
